(19) Europäisches Patentamt
European Patent Office
Office européen des brevets

(11) Veröffentlichungsnummer: **0 029 094**
**B1**

(12) # EUROPÄISCHE PATENTSCHRIFT

(45) Veröffentlichungstag der Patentschrift: **20.07.83**

(51) Int. Cl.³: **C 09 D 5/40,** C 08 C 19/36, C 25 D 13/06

(21) Anmeldenummer: **80105383.6**

(22) Anmeldetag: **09.09.80**

(54) **In der Wärme einzubrennende wässrige Überzugsmittel für die anodische Elektrotauchlackierung.**

(30) Priorität: **10.11.79 DE 2945569**

(43) Veröffentlichungstag der Anmeldung: **27.05.81 Patentblatt 81/21**

(45) Bekanntmachung des Hinweises auf die Patenterteilung: **20.07.83 Patentblatt 83/29**

(84) Benannte Vertragsstaaten: **AT FR GB IT NL SE**

(56) Entgegenhaltungen:
DE-A-2 511 675
FR-A-2 307 293
US-A-3 974 129

(73) Patentinhaber: **CHEMISCHE WERKE HÜLS AG, Postfach 1320, D-4370 Marl 1 (DE)**

(72) Erfinder: **Bartz, Wilfried, Dr., Am Alten Sportplatz 17 a, D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# In der Wärme einzubrennende wässerige Überzugsmittel für die anodische Elektrotauchlackierung

Gegenstand der Erfindung sind in der Wärme einzubrennende wässerige Überzugsmittel für die anodische Elektrotauchlackierung, bestehend aus einer wasserlöslichen bzw. wasserdispergierbaren mit basischen Verbindungen zumindest teilweise neutralisierten und veresterten Additionsverbindung aus 10 bis 35 Gew.% einer oder mehrerer α,β-ungesättigter Dicarbonsäuren und 65 bis 90 Gew.% eines bei 20° C flüssigen Butadienpolymerisats mit mindestens 50 mol% Butadieneinheiten und einem Molgewicht im Bereich von 400 bis 6000 als Bindemittel, ggf. geringen Mengen organischem Lösemittel und üblichen Hilfs- und Zusatzstoffen.

Derartige Überzugsmittel sind grundsätzlich bekannt (GB-A Nr. 1102652) und werden in erster Linie für elektrophoretische Auftragsmethoden eingesetzt. Die aus diesen Überzugsmitteln hergestellten Überzüge können jedoch bezüglich ihres Korrosionsschutzes nicht befriedigen. Nachgängige Entwicklungen versuchten durch Optimierung der Polybutadienkomponente oder durch Verwendung von Zusatzharzen Verbesserungen zu erreichen. Die erzielten Effekte genügen heute aber nicht mehr den gestiegenen Korrosionsschutzansprüchen, insbesondere im Anwendungsbereich für Automobilgrundierungen.

Aufgabe der Erfindung war es, unter Beibehaltung der für diese Überzugsmittel bekannten guten Allgemeineigenschaften, die geschilderten Nachteile zu vermeiden.

Die Aufgabe wurde dadurch gelöst, dass die Additionsverbindung zu 20 bis 70 Eq%, bezogen auf die Säurezahl, mit einem oder mehreren Alkoholen der allgemeinen Formel A

$$R^4{-}CH{=}\underset{R^1}{\underset{|}{C}}{-}\underset{R^2}{\underset{|}{CH}}{-}(\underset{R^3}{\underset{|}{CH}})_n{-}OH \qquad (A)$$

in der $R^1$, $R^2$ und $R^3$ gleich oder ungleich sein können und Wasserstoff oder eine Methylgruppe bedeuten, $R^4$ Wasserstoff oder eine Alkylgruppe mit 1 bis 5 C-Atomen bedeutet und n für 0 oder 1 steht, verestert ist. Die Menge an erfindungsgemäss ungesättigtem Alkohol wird bevorzugt so gewählt, dass 25 bis 45 Eq%, bezogen auf die Säurezahl, der Additionsverbindung verestert sind. Die Säurezahlen werden durch Titration mit KOH in Pyridin/Wasser ermittelt.

Für die erfindungsgemässen Überzugsmittel besonders geeignete ungesättigte Alkohole sind z.B. Allylalkohol, Methallylalkohol, Krotylalkohol, 1-Buten-3-ol, 2-Äthylhexen-2-ol-1. Die hier genannten Alkohole können für sich oder im Gemisch eingesetzt werden.

Neben den erfindungsgemässen ungesättigten Alkoholen können gesättigte Alkohole verwendet werden. Beispiele für diese Gruppe von Alkoholen sind Methanol, Äthanol, Propanole, Butanole, Äthylenglykolmonoalkyläther mit 1 bis 4 C-Atomen im Alkylrest, Benzylalkohol.

Sowohl bei den erfindungsgemässen ungesättigten, als auch bei den zusätzlich zu verwendenden gesättigten Alkoholen werden solche bevorzugt, die primäre Hydroxylgruppen besitzen.

Die Summe der Mengen der ungesättigten und gesättigten Alkohole soll vorzugsweise so gewählt werden, dass mindestens 40 Eq% der Carboxylgruppen verestert sind.

Zur Herstellung der Additionsverbindung werden als Basispolymere hierfür bekannte Butadienhomo- und/oder -copolymerisate verwendet. Als Comonomere kommen insbesondere andere konjugierte Diolefine, wie z.B. 1,3-Pentadien, Isopren o. ä. in Frage. Ferner können in Mengen bis zu 30 mol% aliphatische Monoolefine, wie Äthylen, Propylen oder aromatische Vinylverbindungen, wie z.B. Styrol, als Comonomere eingesetzt werden. Die Basispolymeren sollen mindestens 50 mol%, vorzugsweise mindestens 70 mol% und insbesondere mindestens 90 mol%, Butadieneinheiten enthalten. Für die erfindungsgemässen Überzugsmittel sind insbesondere solche Bindemittel geeignet, die als Basis Homopolybutadiene enthalten. Die Molgewichte der Basispolymeren liegen im Bereich von 400 bis 6000, vorzugsweise 700 bis 5000 bzw., bei Verwendung von Butadienhomopolymerisaten im Bereich von 850 bis 5000. Die Molgewichte werden dampfdruckosmometrisch bestimmt.

Die Butadienpolymerisate können, so wie sie bei der Herstellung anfallen, direkt für die Umsetzung mit den α,β-ungesättigten Dicarboxylverbindungen verwendet werden. Daneben ist es aber auch möglich, Gemische von verschiedenen Polymerisaten einzusetzen und/oder die Polymerisate mit Hilfe bekannter Massnahmen, wie beispielsweise partielle Hydrierung, Isomerisierung bzw. Cyclisierung vor der Umsetzung mit den α,β-ungesättigten Dicarboxylverbindungen zu modifizieren.

Im Rahmen der Erfindung werden vorzugsweise solche Butadienpolymerisate (Basispolymere) eingesetzt, bei denen mindestens 30%, vorzugsweise mehr als 40%, der vorhandenen Doppelbindungen 1,4-Doppelbindungen sind. Hiervon werden wiederum jene Produkte bevorzugt, bei denen mindestens 20% der insgesamt vorhandenen Doppelbindungen als cis-1,4-Doppelbindungen vorliegen. Bei Butadienpolymerisaten, deren Anteil an vinylartigen Doppelbindungen höchstens 40% beträgt, soll der Anteil an cis-1,4-Doppelbindungen mindestens 30% betragen.

Die Additionsverbindung wird durch Anlagerung von α,β-ungesättigten Dicarbonsäuren an die Butadienpolymerisate erhalten. Derartige Verfahren sowie die dafür eingesetzten Dicarbonsäuren sind aus dem Stand der Technik grundsätzlich bekannt (DE-A Nr. 2627635). Vorteilhafterweise einzusetzende α,β-ungesättigte Dicarbonsäuren weisen 8 C-Atome oder weniger auf, wie z.B. Maleinsäure, Chlormaleinsäure, Fumarsäure, Citraconsäure, 1,2-Diäthylmaleinsäure. Anstelle der freien Dicarbonsäuren werden vorzugsweise die jeweils entsprechenden Säureanhydride verwendet. Besonders bevorzugt ist Maleinsäureanhydrid, vorzugsweise in Mengen von 12 bis 25 Gew.%.

Besonders vorteilhaft und technisch einfach gestaltet sich die Herstellung der erfindungsgemässen Bindemittel, d.h. der teilveresterten Additionsverbindungen, wenn die Additionsverbindungen Anhydrid angelagert enthalten. Die Herstellung erfolgt unter milden Bedingungen, ggf. in Gegenwart geringer Mengen üblicher basischer oder saurer Katalysatoren, in Anwesenheit der erfindungsgemässen ungesättigten Alkohole unter Bildung saurer Halbester.

Weisen die teilveresterten Additionsverbindungen noch intakte Anhydridgruppen auf, so empfiehlt es sich, die verbliebenen noch nicht umgesetzten Anhydridgruppen vor der Neutralisation in bekannter Weise zu hydrolysieren. Insbesondere ist diese Massnahme dann angezeigt, wenn organische Basen zur Neutralisation verwendet werden, die mit Anhydridgruppen unter Ausbildung kovalenter Bindungen reagieren.

Die teilweise veresterten erfindungsgemässen Bindemittel müssen noch eine genügend hohe Restsäurezahl aufweisen, um nach der Neutralisation eine ausreichende Wasserlöslichkeit bzw. -dispergierbarkeit zu besitzen. Zur Erzielung guter Verarbeitbarkeit und unter Berücksichtigung der besonderen Erfordernisse der Elektrotauchlackierung werden solche Produkte bevorzugt, die Säurezahlen zwischen 40 und 150, insbesondere zwischen 60 und 120 mg KOH/g aufweisen. Die teilweise veresterten Additionsverbindungen aus Butadienpolymerisaten und $\alpha,\beta$-ungesättigten Dicarbonsäuren können nach den Methoden des Standes der Technik wasserlöslich oder wasserdispergierbar gemacht werden. Dies geschieht dadurch, dass die Additionsverbindungen wenigstens teilweise mit einer basischen Verbindung, wie z.B. einem organischen Amin, Ammoniak oder einer anorganischen Alkaliverbindung neutralisiert werden. Beispiele dieser alkalischen Verbindungen sind Methylamin, Äthylamin, Äthylmethylamin, Dimethylamin, Diäthylamin, Trimethylamin, Triäthylamin; Mono-, Di- oder Tributylamine; Mono-, Di- oder Triäthanolamine; N,N-Diäthyläthanolamin, N,N-Dimethyläthanolamin, N-Methylmorpholin, Natriumhydroxid, Kaliumhydroxid, Ammoniumcarbonat.

Um eine hinreichende Wasserlöslichkeit bzw. -dispergierbarkeit der beschriebenen Bindemittel in Wasser zu erreichen, muss die zugegebene Menge an basischen Verbindungen genügend hoch gewählt werden. Je höher die Restsäurezahl der Additionsprodukte ist, desto geringere Neutralisationsgrade sind zur Erreichung des gewünschten Effektes zulässig. Die erforderliche Mindestmenge liegt in der Regel bei 0,3 bis 0,5 Äquivalenten Base/Säureäquivalent. In bezug auf die erfindungsgemässen Bindemittel bestehen jedoch keine Bedenken, selbst überstöchiometrische Mengen von beispielsweise 1,5 bis 2,0 Äquivalenten Base/Säureäquivalent anzuwenden. Dem Fachmann bleibt also die Möglichkeit, durch Variation des Neutralisationsgrades die elektrophysikalischen Kenndaten der beanspruchten Überzugsmittel weit zu verändern und diese damit im Hinblick auf die anodische Abscheidung optimal an die jeweiligen apparativen Gegebenheiten und die bestehenden Applikationsprobleme anzupassen. Vorzugsweise werden jedoch die basischen Verbindungen im stöchiometrischen Unterschuss zugesetzt. Als günstig haben sich Neutralisationsgrade von 0,5 bis 0,8 Äquivalenten Base/Säureäquivalent erwiesen.

Die derart neutralisierten Bindemittel sind mit Wasser unbegrenzt verdünnbar. Die Praxis hat jedoch gezeigt, dass der Zusatz organischer Lösemittel oder Lösemittelmischungen eine leichtere Verarbeitbarkeit der Bindemittel bewirkt und zur Erhöhung der Stabilität der wässerigen Überzugsmittel bzw. zur Verbesserung des Verlaufs der noch nicht eingebrannten Überzüge beiträgt. Diese Massnahmen sind dem Fachmann grundsätzlich bekannt. Für den genannten Zweck eignen sich beispielsweise Isopropanol, Butanole, Diacetonalkohole, Alkylcellosolven und Dimethyläther von Glykolen. Diese Lösemittel können in Mengen von bis zu 100, vorzugsweise 5 bis 50 Gewichtsteilen pro 100 Gewichtsteile Bindemittel eingesetzt werden. Der Zusatz der Lösemittel erfolgt in der Regel vor, während oder nach der Neutralisationsstufe. Sofern es sich um inerte Lösemittel handelt, ist es gelegentlich sogar vorteilhaft, diese bereits vor der Veresterung den Additionsverbindungen zuzusetzen.

Die erfindungsgemässen Überzugsmittel werden auf einen Feststoffgehalt von 1 bis 30 Gew.%, vorzugsweise 5 bis 20 Gew.%, eingestellt. Sie können jedoch auch nach anderen bekannten Verfahren, wie Tauchen, Spritzen oder Fluten, appliziert werden, jedoch mit höheren Feststoffgehalten. Die Überzugsmittel können übliche Pigmente, Stabilisatoren, Füllstoffe sowie andere übliche Hilfs- und Zusatzstoffe enthalten.

Da die erfindungsgemässen Bindemittel oxidativ trocknende Eigenschaften besitzen, ist es üblicherweise nicht erforderlich, den Überzugsmitteln weitere Harze als Vernetzungsmittel zuzusetzen. Selbstverständlich können weitere Bindemittel, welche als Vernetzungsmittel wirken, wie beispielsweise Aminoplaste oder Phenolharze, mitverwendet werden. Besonders geeignet sind in diesen Fällen handelsübliche methylol- oder alkoxymethylgruppentragende Aminoplaste bzw. Phenolharze.

Ferner können die erfindungsgemässen Überzugsmittel in Kombination mit anderen üblichen, anodisch abscheidbaren Bindemitteln, wie z.B. carboxylgruppenhaltigen Kohlenwasserstoffharzen oder Epoxyestern, verwendet werden. Der Anteil der Fremdharze am Gesamtbindemittel soll jedoch 40 Gew.% nicht übersteigen.

Die erfindungsgemässen Bindemittel sowie die als Vernetzungsmittel dienenden Fremdharze können in physikalischer Mischung zu den beanspruchten Überzugsmitteln verarbeitet werden. In vielen Fällen, insbesondere bei Einsatz von Harzen mit relativ niedrigem Molgewicht, ist es vorteilhaft, die Mischung vor der Weiterverarbeitung einer

Vorkondensation bei erhöhter Temperatur, z.B. Temperaturen im Bereich von 70 bis 150° C, zu unterwerfen. Solche Vorkondensate zeigen gegenüber den physikalischen Mischungen in der Regel verbesserte lacktechnische Eigenschaften.

Zur elektrophoretischen Abscheidung können Spannungen im Bereich von 10 bis 500, vorzugsweise 50 bis 300 V, angelegt werden. Die Badtemperaturen sollten im Bereich von 10 bis 40, vorzugsweise 20 bis 30° C, liegen.

Die erfindungsgemässen Überzugsmittel werden bei Temperaturen im Bereich von 120 bis 250, vorzugsweise 140 bis 190° C, innerhalb von 10 bis 60, vorzugsweise 15 bis 40 min eingebrannt.

Die erfindungsgemässen wässerigen Überzugsmittel weisen eine ausgezeichnete Lagerbeständigkeit auf. Sie stehen diesbezüglich den Überzugsmitteln des Standes der Technik auf Basis entsprechender, mit gesättigten Alkoholen veresterter Additionsverbindungen in nichts nach; mit monomeren Acrylaten modifizierten Bindemitteln sind sie überlegen. Die mit den erfindungsgemässen Überzugsmitteln erhaltenen Beschichtungen zeigen gute Allgemeineigenschaften, wie Härte, Elastizität und Wasserfestigkeit.

Bezüglich des Korrosionsschutzes übertreffen sie die Überzugsmittel des Standes der Technik bei weitem.

*Beispiele*

A. *Basispolymere*

Für die Herstellung der erfindungsgemässen Überzugsmittel wurden die folgenden Basispolymeren 1 bis 3 eingesetzt:

1) Homopolybutadien (Iodzahl nach Wijs: 445; 1,4-cis/1,4-trans/Vinyl=73:25:2; Molgewicht: 1700; Viskosität/20° C: 0,8 Pa·s).

2) Homopolybutadien (Iodzahl nach Wijs: 435; 1,4-cis/1,4-trans/Vinyl=52:11:37; Molgewicht: 1600; Viskosität/20° C: 1,2 Pa·s).

3) Homopolybutadien (Iodzahl nach Wijs: 446; 1,4-cis/1,4-trans/Vinyl=33:47:20; Molgewicht: 4540; Viskosität/20° C: 3,9 Pa·s).

B. *Herstellung der veresterten Additionsverbindungen*

1) 2451 g des Basispolymeren A 1 und 549 g Maleinsäureanhydrid (MSA) wurden in Gegenwart von 3 ml Acetylaceton und 36 g Cu-naphthenatlösung (10% Cu) unter Stickstoff in einer Rührapparatur 1 h bei 180° C und anschliessend 3 h bei 190° C umgesetzt. Das MSA-Addukt enthielt ≤0,1 Gew.% freies MSA und wies eine Säurezahl von 167 mg KOH/g (titriert mit KOH in Pyridin/Wasser) auf. 900 g des MSA-Adduktes wurden mit 70 g Allylalkohol in Gegenwart von 2 g Triäthylamin während 1 h bei 80° C, dann 2 h bei 90° C und schliesslich 1 h bei 100° C verestert. Produkt B 1 wies eine Säurezahl von 95 mg KOH/g auf. Der Veresterungsgrad, bezogen auf die Säurezahl des MSA-Adduktes, beträgt 40 Äquivalentprozent.

2) 900 g des vorstehend beschriebenen MSA-Adduktes wurden analog zunächst mit 38,9 g Allylalkohol bis zu einer Säurezahl von 122 mg KOH/g, entsprechend 24% Veresterung, und anschliessend mit 25,7 g Methanol verestert. Die Endsäurezahl von B 2 betrug 92 mg KOH/g entsprechend einem Gesamtveresterungsgrad von 41 Äquivalentprozent.

3) 900 g des MSA-Adduktes entsprechend B 1 wurden mit 87 g Krotylalkohol in Gegenwart von 3 g Triäthylamin 1 h bei 80° C, 2 h bei 90° C und anschliessend 2 h bei 100° C umgesetzt. Die Säurezahl von Produkt B 3 betrug 90 mg KOH/g entsprechend einem Veresterungsgrad von 40 Äquivalentprozent.

4) Entsprechend den in B wiedergegebenen Arbeitsweisen wurden die in der Tabelle 1 angeführten Bindemittel B 4 bis B 6 sowie X hergestellt.

Tabelle 1. Kennzahlen gemäss B 4 (Gewichtsverhältnis Basispolymer: MSA = 81,7:18,3)

| Additionsverbindung Nr. | Basispolymer | Alkohol | Veresterungsgrad* (%) | Säurezahl (mg KOH/g) |
|---|---|---|---|---|
| B 4 | A 1 | Buten-1-ol-(3) | 33 | 104 |
| B 5 | A 2 | Allylalkohol | 40 | 104 |
| B 6 | A 3 | Allylalkohol | 40 | 107 |
| X | A 3 | Methanol | 44 | 105 |

* Berechnet mit Bezug auf die Säurezahl des MSA-Adduktes.

C. *Zubereitung von Überzugsmitteln und Überzügen*

*Beispiel 1*

360 g des Produktes B 1 wurden in 154,3 g Diacetonalkohol gelöst und mit 57,6 g Titandioxid (Rutil), 46,8 g Kaolinit sowie 3,6 g Russ vermischt. Die Mischung wurde bis zu einer Kornfeinheit <5 µ auf einem Dreiwalzenstuhl vermahlen.

500 g der erhaltenen Paste wurden 30 min intensiv mit 100 g 5prozentigem wässerigen Ammoniak verrührt, dann wurde unter Rühren mit vollentsalztem Wasser auf 2892 g aufgefüllt. Das so erhaltene wässerige Überzugsmittel besass einen pH-Wert von 7,5, sein Bindemittelgehalt betrug 10 Gew.%; Pigmentgehalt: 30 Gew.%, bezogen auf Bindemittel.

Nach 24stündigem Reifen des Überzugsmittels bei 40° C liess sich bei einer Badtemperatur von 25° C und einer angelegten Spannung von 160 V

innerhalb von 2 min auf einem als Anode geschalteten, zinkphosphatierten Stahlblech ein Film abscheiden, der nach dem Abspülen mit vollentsalztem Wasser und Einbrennen bei 180° C/20 min einen von Oberflächenstörungen freien, elastischen Überzug mit einer Schichtstärke von 25 μ ergab.

*Beispiele 2 bis 6 sowie A*

Entsprechend Beispiel 1 wurden wässerige Überzugsmittel bereitet und anodisch abgeschiedene Überzüge hergestellt.

Mit Buchstaben gekennzeichnete Produkte sind nicht erfindungsgemäss.

Tabelle 2

Blasenbildung im Salzsprühtest (ASTM B 117, <35°C, 5prozentige NaCl-Lösung)

| Beispiel Nr. | Additions-verbindung Nr. | Salzsprühtest (h) / Anzahl der Blasen von der Grösse ≥g 2* |
|---|---|---|
| 1 | B 1 | 750-1000 / m 1-2 |
| 2 | B 2 | 750 / m 1 |
| 3 | B 3 | 500 / m 1 |
| 4 | B 4 | 336 / m 1 |
| 5 | B 5 | 750 / m 1-2 |
| 6 | B 6 | 500 / m 2 |
| A | X | 240 / m 1-2** |

* Angegeben sind die Dauer (h) des Salzsprühtestes bis Blasen der Grösse ≥g 2 auftreten sowie deren Menge (m) zu diesem Zeitpunkt. Beurteilung der Blasen erfolgt nach DIN 53 209.

Beurteilungszyklus: 168-240-336-500-750-1000 h.

** Nach 500 h Rissbildung und weitgehender Haftungsverlust.

Tabelle 3

Blasenbildung bei Lagerung in vollentsalztem Wasser bei 40° C, gemessen an 25 μ Filmen

| Beispiel Nr. | Additions-verbindung Nr. | Tage bis zum Auftreten von Blasen ≥g 2 / Anzahl[1] | Abriss[2] (% der Fläche) |
|---|---|---|---|
| 6 | B 6 | 7 / m 4 | <10 |
| A | X | 2 / m 5 | ca. 80 |

[1] Beurteilung der Blasen nach DIN 53 209; Durchführung des Tests in Anlehnung an ISO 1521: die lackierten Bleche wurden zur Hälfte in das Wasser in einen mit Deckel versehenen Glaskasten gestellt; Prüftemperatur 40 ± 1° C. Beurteilt wurden nach 2, 4, 7, 9 und 14 d sowohl die eingetauchte als auch die im Dampfraum befindliche Fläche.

[2] 1 h nach Entnahme der Platten aus dem Wasser bei Testende (14 d) und Lagerung bei Raumklima wird die Haftung durch Abriss mit einem 50-mm-Kreppband geprüft.

## Patentanspruch

In der Wärme einzubrennendes wässeriges Überzugsmittel für die anodische Elektrotauchlackierung, bestehend aus einer wasserlöslichen bzw. wasserdispergierbaren, mit basischen Verbindungen zumindest teilweise neutralisierten und veresterten Additionsverbindung aus 10 bis 35 Gew.% einer oder mehrerer α,β-ungesättigter Dicarbonsäuren und 65 bis 90 Gew.% eines bei 20° C flüssigen Butadienpolymerisats mit mindestens 50 mol% Butadieneinheiten und einem Molgewicht im Bereich von 400 bis 6000 als Bindemittel, gegebenenfalls geringe Mengen, organischem Lösemittel und üblichen Hilfs- und Zusatzstoffen, dadurch gekennzeichnet, dass die Additionsverbindung zu 20 bis 70 Eq%, bezogen auf die Säurezahl, mit einem oder mehreren Alkoholen der allgemeinen Formel (A)

$$R^4-CH=\underset{R^1}{\underset{|}{C}}-\underset{R^2}{\underset{|}{CH}}-(\underset{R^3}{\underset{|}{CH}})_n-OH \qquad (A)$$

in der $R^1$, $R^2$ und $R^3$ gleich oder ungleich sein können und Wasserstoff oder eine Methylgruppe bedeuten, $R^4$ Wasserstoff oder eine Alkylgruppe mit 1 bis 5 C-Atomen bedeutet und n für 0 oder 1 steht, verestert ist.

## Claim

A heat-curable aqueous coating composition for anodic electro-dip coating, comprising as binder an adduct of from 10 to 35% by weight of one or more α,β-unsaturated dicarboxylic acids and 65 to 90% by weight of a butadiene polymer which is liquid at 20° C and has at least 50 mol% of butadiene units and a molecular weight of from 400 to 6,000, said adduct being at least partly esterified and neutralized with basic material and being water-soluble or water-dispersible, the composition optionally containing a small quantity of an organic solvent and conventional auxiliaries and additives, characterized in that the adduct is esterified to the extent of from 20 to 70 Eq%, based on the acid component, with one or more alcohols of the general formula

$$R^4-CH=\underset{R^1}{\underset{|}{C}}-\underset{R^2}{\underset{|}{CH}}-(\underset{R^3}{\underset{|}{CH}})_n-OH \qquad (A)$$

where $R^1$, $R^2$ and $R^3$ are identical or different and denote hydrogen or methyl, $R^4$ is hydrogen or alkyl of 1 to 5 carbon atoms and n is 0 or 1.

## Revendication

Agent de revêtement aqueux à cuire à la chaleur pour le laquage électrique anodique par immersion, constitué par un composé d'addition estérifié qui est soluble ou dispersable dans l'eau, est au moins en partie neutralisé avec des composés basiques et est obtenu à partir de 10 à 35% en poids d'un ou plusieurs acides dicarboxyliques α,β-insaturés et à partir de 65 à 90% en poids d'un polymère du butadiène liquide à 20° C, comportant au moins 50 mol% d'unités butadiène et un poids moléculaire de 400 à 6000 comme liant, comportant, le cas échéant, de faibles quantités de solvant organique et des adjuvants et additifs usuels, caractérisé par le fait que le composé d'addition est estérifié pour 20 à 70 Eq%, relativement à l'indice d'acide, par un ou plusieurs alcools de la formule générale (A)

$$R^4-CH=\underset{R^1}{\underset{|}{C}}-\underset{R^2}{\underset{|}{CH}}-(\underset{R^3}{\underset{|}{CH}})_n-OH \qquad (A)$$

dans laquelle $R^1$, $R^2$ et $R^3$ peuvent être identiques ou différents et représentent de l'hydrogène ou un groupe méthyle, $R^4$ représente de l'hydrogène ou un groupe alkyle comportant de 1 à 5 atomes de carbone et n est égal à 0 ou à 1.